# EUROPÄISCHE PATENTSCHRIFT

(11) **EP 2 877 031 B1**
(45) Veröffentlichungstag und Bekanntmachung des Hinweises auf die Patenterteilung: **04.10.2023**
(21) Anmeldenummer: 13736596.1
(22) Anmeldetag: 15.07.2013
(51) Int. Cl.: A22C 25/08

(54) **VORRICHTUNG ZUM VERARBEITEN VON FISCHEN**
DEVICE FOR PROCESSING FISH
DISPOSITIF POUR TRAITER DES POISSONS

(30) Priorität: 24.07.2012 DE 102012106711
(43) Veröffentlichungstag der Anmeldung: 03.06.2015
(73) Patentinhaber: Nordischer Maschinenbau Rud. Baader GmbH + Co. KG, 23560 Lübeck (DE)
(72) Erfinder: JÜRS, Michael, 23730 Neustadt (DE)
(74) Vertreter: Stork Bamberger Patentanwälte PartmbB
(86) Internationale Anmeldenummer: PCT/EP2013/064939
(87) Internationale Veröffentlichungsnummer: WO 2014/016160

(56) Entgegenhaltungen:
- DE-A1- 1 454 087
- DE-A1- 4 318 810
- DE-B- 1 237 750
- DE-C1- 3 403 771
- US-A- 2 961 696

## Beschreibung

Die Erfindung betrifft einen L-förmigen Stützkörper zum Aufnehmen von Fisch und zum Fördern desselben mit dem Fischschwanz voraus durch ein Schneidaggregat mit einem Kreismesserpaar einer Fischverarbeitungsvorrichtung, die einen endlos umlaufenden Transportförderer aufweist, wobei der Stützkörper einen Grundkörper zum Befestigen desselben an dem Transportförderer und einen über eine Seitenwand des Grundkörpers hinausragenden Tragsteg mit einer oberseitig angeordneten Stützkante zum Aufnehmen der Mittelgräte des aufzunehmenden Fisches aufweist.

Die Erfindung betrifft des Weitern eine Vorrichtung zum Verarbeiten von Fischen, umfassend ein Schneidaggregat, wobei das Schneidaggregat ein Kreismesserpaar zum Freischneiden der Mittelgräten aufweist, und eine Transportfördereinheit mit einem endlos umlaufenden Transportförderer und mindestens einem daran befestigten L-förmigen Stützkörper zum Aufnehmen der Fische und zum Fördern derselben durch das Schneidaggregat mit dem Fischschwanz voraus, wobei jeder Stützkörper einen an dem Transportförderer befestigten Grundkörper und einen über eine Seitenwand des Grundkörpers hinausragenden Tragsteg mit einer oberseitig angeordneten Stützkante zur Aufnahme der Mittelgräte des jeweils zu verarbeitenden Fisches aufweist.

Solche Stützkörper und/oder Vorrichtungen (vgl. Dokument US 2 961 696 A) werden in der Fisch verarbeitenden Industrie eingesetzt, um die Filets vom Grätenskelett des Fisches zu trennen. Genauer gesagt werden die ventralen Speichen freigeschnitten. Dabei greifen jeweils zwei ein Kreismesserpaar bildende Kreismesser für die Bauchschnitte von unten am Fisch an. Die Kreismesser sind um eine Achse rotierend angetrieben, wobei die Achse quer zu einer Förderrichtung des Transportförderers verläuft. Zum Freischneiden wird der Fisch in Förderrichtung mit seiner Bauchseite durch das Kreismesserpaar hindurch gefördert, wobei der Fisch beziehungsweise die Mittelgräte (Wirbelsäule) des Fisches, die auf der Stützkante des Stützkörpers aufliegt, eine Transportebene definiert. Dabei kann der insbesondere obere Bereich des Stützkörpers, vorzugsweise mit dessen Stützkante, sattelförmig ausgestaltet sein. Die L-förmige Ausgestaltung des Stützkörpers wird jedoch im Wesentlichen durch den hinausragenden Tragsteg geprägt. Die beiden Kreismesser für die Bauchschnitte liegen unterhalb der Transportebene. Um den Fischen Transport zu geben, ist die Oberseite des jeweiligen Tragstegs mit der Stützkante versehen. Vorzugsweise weist jeder Tragsteg auf seiner Oberseite Zähne auf, die sich in die jeweilige Mittelgräte der Fische und/oder deren Wirbelfortsätze einhaken und somit eine formschlüssige Verbindung bewirken. Die Stützkante kann somit zur Herstellung einer kraft- und/oder formschlüssigen Verbindung zur Mittelgräte des Fisches dienen. Für einige Fischsorten ist es ausreichend, eine Reihe von Zähnen vorzusehen. Insbesondere salmonide Fischsorten weisen eine Mittelgräte auf, bei der im Bereich der Bauchhöhle die Rippenansätze über die gesamte Länge der Mittelgräte gleichmäßig in einem engen Winkel aus der Mittelgräte ragen, so dass sich die Zähne mittig unter der Mittelgräte verhaken. Die eng von der Mittelgräte abstehenden Rippenansätze können dabei quasi eine Führung bilden, so dass die Mittelgräte stets mittig auf der Stützkante aufliegt. Bei Fischarten wie Alaska Pollack, Merluza, Dorsch, Schellfisch oder Wittling mit einer geköpften Fischlänge von 18 bis 38 cm weist die Mittelgräte einen Durchmesser von ca. 3 bis 5 mm auf. Um eine möglichst hohe Ausbeute zu erreichen, ist es vorgesehen, dass die beiden Kreismesser des Kreismesserpaars jeweils links und rechts neben der Mittelgräte beziehungsweise neben den aus der Mittelgräte hervorstehenden Speichen schneiden beziehungsweise angeordnet sind. Die beiden Kreismesser des Kreismesserpaars weisen also einen Abstand zueinander auf, um das Fördern des jeweiligen Fisches durch die beziehungsweise zwischen den Kreismessern hindurch zu ermöglichen. Es kann deshalb vorgesehen sein, dass die Kreismesser einen Abstand zwischen 3,5 mm und 5 mm voneinander haben. Bevorzugt weisen die Kreismesser einen Abstand von 4 mm voneinander auf.

Um den Transport der Fische durch das Schneidaggregat zu ermöglichen, weist der oder jeder Stützkörper einen Grundkörper und einen Tragsteg auf. Diese können L-förmig zueinander angeordnet sein. Dazu ist der Grundkörper des Stützkörpers an dem Transportförderer befestigt oder zumindest dazu eingerichtet und/oder ausgebildet. Der Tragsteg schließt dabei auf dem von dem Transportförderer abgewandten Ende des Grundkörpers an und überragt eine Seitenwand des Grundkörpers seitlich. Hierbei ist vorgesehen, dass der Stützkörper als solches einstückig ausgebildet ist.

Um einen möglichst präzisen und sauberen Schnitt mittels des Kreismesserpaars zu erlauben, ist es aus dem Stand der Technik bekannt, dass der oder jeder Tragsteg unterseitig eine hervorspringende Führungskante aufweist. Die Führungskante dient zum Führen der Kreismesser beim Fördern von Fisch durch das Schneidaggregat. Ferner dient die Führungskante als Gegenlage beziehungsweise als Schneidgegenlage für das Kreismesserpaar. Zuvor wurde erläutert, dass die Kreismesser einen geringen Abstand voneinander aufweisen, so dass die Führungskante, die beim Fördern des Fisches durch das Schneidaggregat ebenfalls mittig durch das Kreismesserpaar hindurchgeführt wird, eine an den Abstand des Kreismesserpaars angepasste Breite, von beispielsweise 4 mm, aufweist. In der Praxis hat sich jedoch gezeigt, dass die Führungskante mit dem Kreismesserpaar beim Fördern von Fisch durch das Schneidaggregat ungewollt in Kontakt kommen kann. Ebenso besteht die Gefahr, dass die Führungskante seitlich an dem Bauchmesserpaar (also nicht mittig durch das Bauchmesserpaar) vorbei läuft. Als Folge daraus ist es möglich, dass der Stützkörper aus einer der Transportfördereinheit zugeordneten Führung herausspringt, bevor ein Sicherheitselement, wie beispielsweise eine Rutschkupplung das weitere Fördern unterbricht. Schäden an Maschinenteilen sind in diesem Falle unvermeidlich. Mit dem steigenden Alter der Vorrichtung zum Verarbeiten von Fischen und einem damit vielfach verbundenen Verschleiß tritt der zuvor erläuterte Fehler verstärkt auf. Der Verschleiß von Maschinenteilen, insbesondere an der Transportfördereinheit hat noch weitergehende Folgen. Um eine möglichst hohe Ausbeute zu erreichen, ist es vorgesehen, dass die äußere Kreismesserkante (bzw. Schneide) des jeweiligen Kreismessers möglichst dicht an der Unterseite des Tragstegs vorbei geführt wird, um die ventralen Bauchspeichen möglichst dicht an der Mittelgräte freizuschneiden. Aufgrund des zuvor genannten Verschleißes hat sich in der Praxis jedoch gezeigt, dass sich der Abstand zwischen der Unterseite des Tragstegs und der äußeren Kreismesserkante ungewollt soweit verringern kann, dass es zu einem mechanischen Kontakt zwischen dem Tragsteg und dem Kreismesserpaar bzw. deren Schneiden kommt. In diesem Fall wird das Kreismesserpaar stumpf und hat anschließend eine schlechte Schneideigenschaft. Fische werden mit einem derart stumpfen Kreismesserpaar deshalb sehr unsauber geschnitten und die Qualität der verarbeiteten Fische sinkt.

Der Erfindung liegt deshalb die Aufgabe zugrunde, einen einfachen und kostengünstigen Stützkörper zum Aufnehmen und Fördern von Fisch und/oder eine einfache und kostengünstige Vorrichtung zum Verarbeiten von Fischen zu schaffen, die ein verbessertes Freischneiden der Mittelgräte der Fische ermöglichen.

Die Aufgabe wird durch einen L-förmigen Stützkörper gemäß Anspruch 1 dadurch gelöst, dass der Tragsteg eine unterseitig angeordnete Nut aufweist, die als Gegenlage für das Kreismesserpaar ausgebildet ist.

Die Aufgabe wird des Weiteren durch eine Vorrichtung gemäß Anspruch 5 dadurch gelöst, dass jeder Tragsteg eine unterseitig angeordnete Nut aufweist, die als Gegenlage für das Kreismesserpaar ausgebildet ist.

Durch Einsatz einer Nut kann die Ausbeute bei der Verarbeitung von Fischen erhöht werden. Denn die Nut ermöglicht es, das Kreismesserpaar näher an die Mittelgräte heranführen zu können. Alternativ und/oder ergänzend kann die Nut beim Fördern von Fisch durch das Schneidaggregat als Gegenlage für das Kreismesserpaar dienen. Vorzugsweise ist die Nut unterhalb der Stützkante und/oder parallel und/oder mittig zu dieser ausgerichtet. Außerdem bildet die Nut des Tragstegs keine Störkontur zwischen den Kreismessern des Kreismesserpaars. Die Kreismesser können somit nahezu beliebig nahe zueinander angeordnet werden. Insbesondere bei der Verarbeitung von kleinen Fischen kann hierzu ein besonders kleiner Abstand zwischen den Kreismessern des Kreismesserpaars gewählt werden. Außerdem kann der Tragsteg so ausgestaltet sein, dass dieser eine hohe Steifheit aufweist, so dass die Gefahr verringert wird, dass das Kreismesserpaar ungewollt mit dem Tragsteg kollidiert. Vielmehr kann die Nut als Führung und/oder Gegenlage für das Kreismesserpaar dienen.

Eine weitere vorteilhafte Ausgestaltung der Erfindung zeichnet sich dadurch aus, dass sich die Nut jedes Tragstegs über dessen gesamte Länge erstreckt. Die Länge ist hierbei die in Förderrichtung des Transportförderers gesehene Länge des Tragstegs. Mit anderen Worten kann es vorgesehen sein, dass sich die Nut durchgängig über den Tragsteg erstreckt. Somit ist es möglich, bei ungeschlachteten Fischen auch den Bauch über die gesamte Länge aufzuschneiden.

Unter der Nut kann insbesondere eine längliche Ausnehmung an der Unterseite des Tragstegs verstanden werden. Außerdem kann die Nut jedes Tragstegs durch zwei seitliche Nutwände und einen Nutboden begrenzt sein.

Eine weitere vorteilhafte Ausgestaltung der Erfindung zeichnet sich dadurch aus, dass die Nutwände jedes Tragstegs im Bereich eines Einführungsabschnittes konisch zueinander angeordnet sind. Dieser Einfiihrungsbereich kann somit zum Einführen des Kreismesserpaars in die Nut dienen. Damit wird ein zerstörerischer Kontakt zwischen dem Kreismesserpaar und dem Tragsteg effektiv und einfach verhindert. Ferner reduziert sich die mechanische Belastung auf den Transportförderer, insbesondere auf eine Führung des Transportförderers.

Eine weitere vorteilhafte Ausgestaltung der Erfindung zeichnet sich dadurch aus, dass die Nutwände jedes Tragstegs, vorzugsweise bis auf den Einführungsabschnitt, parallel zueinander ausgerichtet sind. Durch diese parallele Ausrichtung der Nut beziehungsweise der Nutwände kann der Stützkörper mittels einer Linearführungseinheit des Transportförderers beziehungsweise der Transportfördereinheit gefördert werden. Somit ist die Vorrichtung besonders kostengünstig herstellbar.

Eine vorteilhafte Ausgestaltung der Erfindung zeichnet sich dadurch aus, dass der oder jeder Tragsteg über den zugehörigen Grundkörper des Stützkörpers quer zu einer Förderrichtung des Transportförderers und/oder quer zu einer Längsrichtung der Nut hinausragt. Somit ist es nicht notwendig, dass der Stützkörper zwischen den Kreismessern des Kreismesserpaars hindurchgeführt wird, um einen zu verarbeitenden Fisch durch das Schneidaggregat zu fördern. Vielmehr ist es aufgrund der vorgenannten Ausgestaltungen möglich, dass der Tragsteg über das Kreismesserpaar weg gefördert wird, wobei das Kreismesser die ventralen Speichen freilegt und den Bauch des zu verarbeitenden Fisches aufschneidet, falls Fisch ohne Schlachtschnitt verarbeitet wird. Das Kreismesserpaar wird deshalb auch als Bauchmesserpaar bezeichnet.

Eine weitere vorteilhafte Ausgestaltung der Erfindung zeichnet sich dadurch aus, dass die Nut des oder jedes Tragstegs in einer Förderrichtung des Transportförderers und/oder in einer Rotationsebene des Kreismesserpaars ausgerichtet ist. Somit ist es möglich, das Schneidaggregat stationär zu der Transportfördereinheit anzuordnen. Ferner kann damit verhindert werden, dass das Kreismesserpaar der Nut nachgeführt werden muss.

Eine weitere vorteilhafte Ausgestaltung der Erfindung zeichnet sich dadurch aus, dass das Kreismesserpaar mittels eines Stellelements des Schneidaggregats aus einer Warteposition in eine Arbeitsposition und/oder umgekehrt bringbar ist. Mittels des Stellelements kann besonders einfach und effektiv verhindert werden, dass das Kreismesserpaar dennoch mit einem Bauteil der Transportfördereinheit und/oder des Transportförderers und/oder des Stützkörpers kollidiert. Um derartigen Elementen auszuweichen, kann das Kreismesserpaar in die Warteposition gebracht werden. Um das Freischneiden der Mittelgräte zu ermöglichen, kann das Kreismesserpaar aus der Warteposition in die Arbeitsposition gebracht werden, wobei der jeweilige Fisch von dem Stützkörper durch das Schneidaggregat gefördert wird. Danach kann das Kreismesserpaar wieder in die Warteposition gebracht werden.

Eine weitere vorteilhafte Ausgestaltung der Erfindung zeichnet sich dadurch aus, dass der oder jeder Stützkörper mittels des Transportförderers beim Fördern von Fisch durch das Schneidaggregat derart geführt ist, dass das Kreismesserpaar in die Nut des zugehörigen Tragstegs einfasst. Damit kann das Kreismesserpaar, insbesondere deren äußere Schneide, besonders nahe an die Mittelgräte des zu verarbeitenden Fisches herangeführt werden. Somit kann eine besonders hohe Ausbeute erreicht werden. Aufgrund des Einfassens des Kreismesserpaars ist zumindest ein Teil des Kreismessers seitlich zu den Wänden der Nut (auch als Nutwände bezeichnet) angeordnet. Die Nut kann somit auch als Gegenlage und/oder als Schneidgegenlage für das Kreismesserpaar dienen, für den Fall, dass ungeschlachteter Fisch verarbeitet wird.

Zuvor wurde bereits erläutert, dass die Nut des oder jedes Tragstegs bevorzugt durch zwei seitliche Nutwände und einen Nutboden begrenzt ist. Eine weitere vorteilhafte Ausgestaltung der Erfindung zeichnet sich dadurch aus, dass ein Abstand der zwei Nutenwände des oder jedes Tragsteges zu einem Abstand der Kreismesser des Kreismesserpaars korrespondiert. Somit ist es möglich, dass die Kreismesser des Kreismesserpaars besonders dicht an den jeweiligen Nutwänden vorbeigeführt und der Fisch deshalb besonders sauber geschnitten werden kann. Ferner können die Nutwände auch zur Führung der Kreismesser des Kreismesserpaars dienen.

Eine weitere vorteilhafte Ausgestaltung der Vorrichtung zeichnet sich dadurch aus, dass das Kreismesserpaar beim Eingriff in die Nut des, insbesondere jeweiligen, Tragstegs von dem zugehörigen Nutboden beabstandet ist. Somit kann ein mechanischer Kontakt zwischen dem Nutboden und dem Kreismesserpaar verhindert werden. Dies gewährleistet außerdem, dass das Kreismesserpaar auch über eine längere Betriebszeit scharf bleibt. Sollte der Stützkörper aufgrund von Verschleiß des Transportförderers etwas sinken, kann aufgrund des Abstandes zwischen dem Nutboden und des Kreismesserpaars gewährleistet werden, dass es zumindest bei einem geringen Verschleiß nicht zu einem Kontakt zwischen dem Nutboden und dem Kreismesserpaar kommt. Die zuvor genannten Vorteile gelten deshalb auch in Kombination mit dieser vorteilhaften Eigenschaft.

Weitere vorteilhafte Merkmale der Erfindung werden aus der Beschreibung der erfindungsgemäßen Ausführungsform zusammen mit den Ansprüchen und/oder den beigefügten Zeichnungen ersichtlich. Dabei können erfindungsgemäße Ausführungsformen einzelne oder eine Kombination mehrerer Merkmale erfüllen beziehungsweise wiedergeben. Die Erfindung wird nachstehend ohne Beschränkung des allgemeinen Erfindungsgedankens anhand eines Ausführungsbeispiels unter Bezugnahme auf die Figuren beschrieben. Jeweils gleiche oder gleichartige beziehungsweise entsprechende Teile werden mit denselben Bezugsziffern versehen, so dass von einer jeweils erneuten Vorstellung abgesehen wird. In den Zeichnungen zeigen:
- Fig.1: eine schematische Darstellung der Vorrichtung in axonometrischer Ansicht,
- Fig. 2: eine Seitenansicht der Vorrichtung und
- Fig. 3: eine Schnittdarstellung der Vorrichtung gemäß eines in Fig. 2 dargestellten Schnittes B-B.

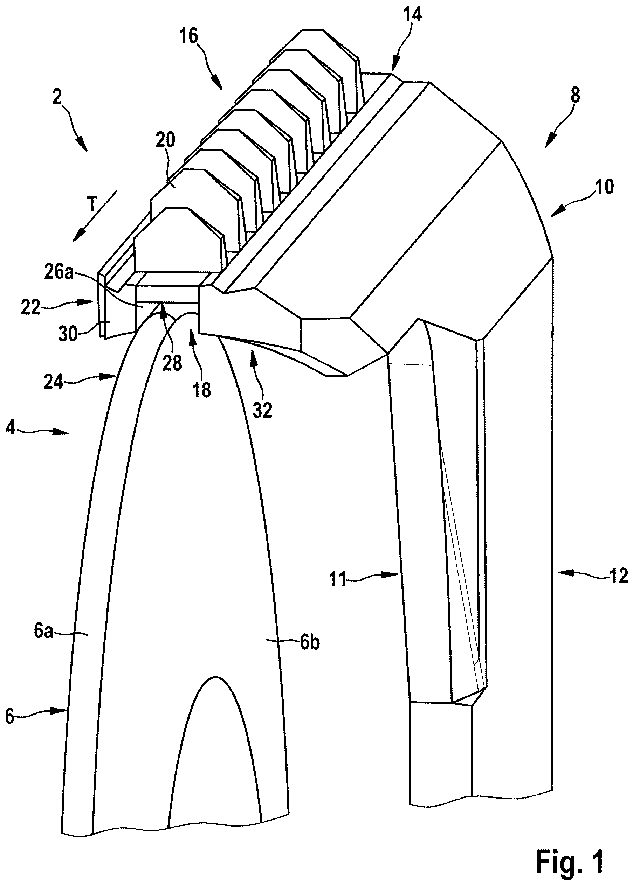

Bezugnehmend auf die schematische Darstellung aus Fig. 1 betrifft die Erfindung einen L-förmiger Stützkörper 10 zum Aufnehmen von Fisch und zum Fördern desselben mit dem Fischschwanz voraus durch ein Schneidaggregat 4 mit einem Kreismesserpaar 6 einer Fischverarbeitungsvorrichtung, die einen endlos umlaufenden Transportförderer aufweist, wobei der Stützkörper 10 einen Grundkörper 12 zum Befestigen desselben an dem Transportförderer und einen über eine Seitenwand 11 des Grundkörpers 12 hinausragenden Tragsteg 14 mit einer oberseitig angeordneten Stützkante 16 zum Aufnehmen der Mittelgräte des aufzunehmenden Fisches aufweist, dadurch gekennzeichnet, dass der Tragsteg 14 eine unterseitig angeordnete Nut 18 aufweist. Hierbei ist es vorgesehen, dass die Nut als Gegenlage für das Kreismesserpaar 6 ausgebildet ist.

Des Weiteren betrifft die Erfindung eine Vorrichtung 2 zum Verarbeiten von Fischen, umfassend ein Schneidaggregat 4, wobei das Schneidaggregat 4 ein Kreismesserpaar 6 zum Freischneiden der Mittelgräte aufweist, und eine Transportfördereinheit 8 mit einem endlos umlaufenden Transportförderer (nicht dargestellt) und mindestens einem daran befestigten L-förmigen Stützkörper 10 zum Aufnehmen der Fische und zum Fördern derselben durch das Schneidaggregat 4 mit dem Fischschwanz voraus, wobei jeder Stützkörper 10 einen an dem Transportförderer befestigten Grundkörper 12 und einen über eine Seitenwand 11 des Grundkörpers 12 hinaus ragenden Tragsteg 14 mit einer oberseitig angeordneten Stützkante 16 zum Aufnehmen der Mittelgräte des jeweils zu verarbeitenden Fisches aufweist, und wobei jeder Tragsteg 14 eine unterseitig angeordnete Nut 18 aufweist. Hierbei ist es vorgesehen, dass die Nut als Gegenlage für das Kreismesserpaar 6 ausgebildet ist.

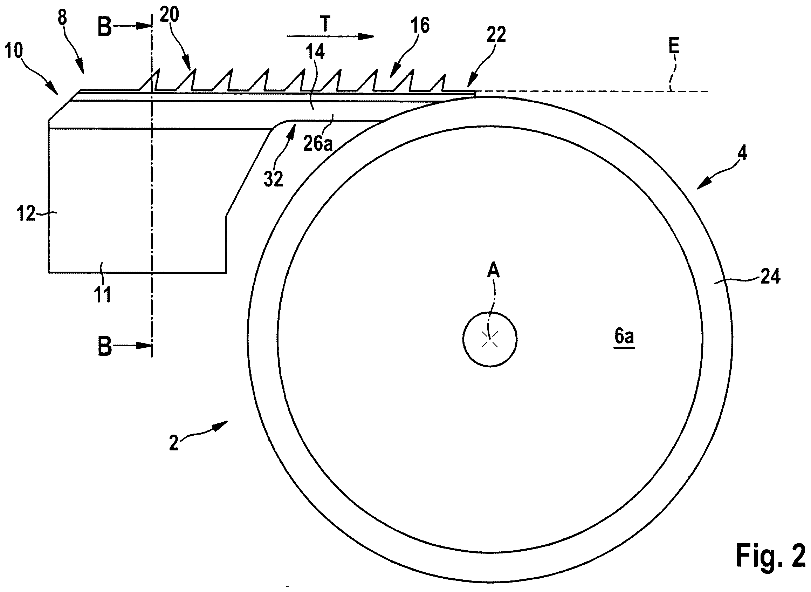

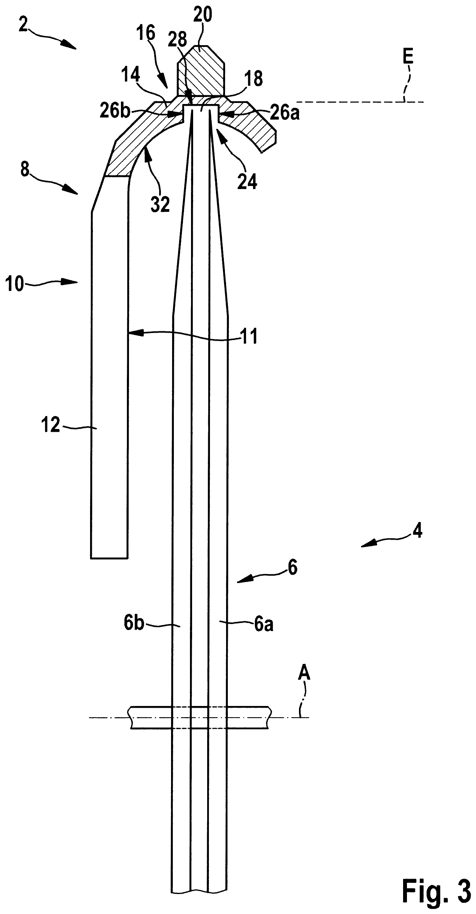

Die Transportfördereinheit 8 umfasst vorzugsweise mehrere, voneinander beabstandet angeordnete Stützkörper 10. Diese L-förmigen Stützkörper 10, die auch als Transportsattel bezeichnet werden, sind fest aber lösbar an dem umlaufenden Transportförderer angeordnet und laufen ebenfalls mit diesem um. Jeder Stützkörper 10 ist zum Aufnehmen von Fisch ausgebildet und/oder ausgerichtet. Durch einen Antrieb des Transportförderers sind auch die auf den Stützkörpern 10 aufgesattelten Fische durch das Schneidaggregat 4 transportierbar beziehungsweise förderbar. Zum Fixieren von Fisch auf dem Stützkörper 10 weist dieser auf der Oberseite eine Stützkante 16 auf. Dazu sind an der Oberseite Zähne oder Profile 20 angeordnet, die sich vorzugsweise über die gesamte Länge des Tragstegs 14 erstrecken. Die Zähne oder Zacken 20 können einreihig, zweireihig oder mehrreihig ausgebildet sein. In Förderrichtung T vorauslaufend mündet der Tragsteg 14 in einer Nase oder einem Horn 22. Die Ausrichtung der Zähne oder Zacken 20 ist variabel. Bevorzugt sind die Zähne oder Zacken 20 in Förderrichtung T geneigt angeordnet. Andere Anordnungen und/oder Neigungen der Zähne oder Zacken 20 sind ebenfalls möglich. Die Dicke und/oder die Breite des Tragstegs 14 und/oder des Stützkörpers 10 ist größer als der Abstand der Kreismessers 6a, 6b des Kreismesserpaars 6. Um Fisch durch das Schneidaggregat 4 zu fördern, ragt der Tragsteg 14 über eine Seitenwand des Grundkörpers 12 des Stützkörpers 10 hinaus. Anders ausgedrückt ist der Stützkörper 10 L-förmig, wobei der Grundkörper 12 den vertikalen Bereich des Stützkörpers 10 und der Tragsteg 14 den horizontalen Bereich des Stützkörpers 10 bilden. Liegt ein geköpfter und entweideter Fisch mit seiner Mittelgräte auf der Stützkante 16 des Tragstegs 14 beziehungsweise Stützkörpers 10, kann der Fisch mit seinem Schwanz voraus und mit dem Rücken nach oben in Förderrichtung T durch das Schneidaggregat 4 gefördert werden. Dabei definiert der Fisch beziehungsweise dessen Mittelgräte oder die Stützkante 16 eine Transportebene E, wie sie beispielsweise in den Fig. 2 und 3 dargestellt ist.

Das Schneidaggregat 4, das vorzugsweise zum Filetieren von Fisch eingerichtet und/oder ausgebildet ist, weist mindestens eine Kreismesserpaar 6 auf. Das rotierend angetriebene Kreismesserpaar 6 ist in bekannter Weise zum Freischneiden der ventralen Bauchspeichen beziehungsweise Bauchgräten ausgebildet und eingerichtet. Ferner ist es vorgesehen, dass die Ebene des Kreismesserpaars 6a, 6b quer zur Transportebene E ausgerichtet ist. Vorzugsweise ist also die gemeinsame Drehachse A der Kreismesser 6a, 6b des Kreismesserpaars 6 in einem rechten Winkel zur Förderrichtung T ausgerichtet. Die beabstandeten Kreismesser 6a, 6b des Kreismesserpaars 6 sind also parallel und/oder koaxial zueinander ausgerichtet.

Wie eingangs erwähnt, ist es zur Erzielung einer hohen Ausbeute von besonderer Relevanz, dass der Schnitt zum Freischneiden der Mittelgräte möglichst dicht an dieser Mittelgräte erfolgt. Es ist deshalb vorgesehen, dass der oder jeder Tragsteg 14 eine unterseitig angeordnete Nut 18 aufweist. Dabei kann die Nut 18 beim Fördern von Fisch durch das Schneidaggregat 4 als Gegenlage für das Kreismesserpaar 6 dienen. Es ist deshalb vorgesehen, dass die Nut 18 als Gegenlage und/oder Schneidgegenlage für das Kreismesserpaar 6 ausgebildet ist. Hierbei handelt es sich um eine äußere und/oder eine zu dem Kreismesserpaar 6 außenseitig angeordnete Gegenlage beziehungsweise Schneidgegenlage. Diese Nut 18 des Tragstegs 14 beziehungsweise des Stützkörpers 10 erlaubt es, dass das Freischneiden der Mittelgräte eines Fisches mittels des Kreismesserpaars 6 des Schneidaggregats 4 besonders dicht an der Transportebene E beziehungsweise an der Mittelgräte selbst erfolgen kann. Anders ausgedrückt kann das Kreismesserpaar 6 im Besonderen im Bereich vor der Nase 22 des Tragstegs 14 annähernd um den Betrag der Tiefe der Nut 18 näher an der Mittelgräte des zu verarbeitenden Fisches schneiden, um die Mittelgräte freizulegen. In diesem Fall ist die durch die Nut 18 gebildete Schneidgegenlage außen an dem Kreismesserpaar 6 angeordnet. Die Kreismesser 6a, 6b des Kreismesserpaares 6 können somit besonders nahe nebeneinander angeordnet sein, um näher an den ventralen Speichen zu schneiden. Mit anderen Worten bildet die Nut 18 (im Gegensatz zu einem Steg) keine zwischen den Kreismessern 6a, 6b des Kreismesserpaars 6 angeordnete Störkontur. Die Kreismesser 6a, 6b des Kreismesserpaares 6 können somit besonders einfach auf einen gewünschten Abstand voneinander angepasst werden. Ist es beispielsweise erforderlich, dass die Kreismesser 6a, 6b einen Abstand von 3 mm für besonders kleine Fische aufweisen sollen, so wird dies durch die Nut 18 nicht verhindert. Mit anderen Worten kann der Abstand der Kreismesser 6a, 6b des Kreismesserpaares 6 variabel an die zu verarbeitenden Fische angepasst werden, ohne den Stützkörper 10 verändern zu müssen.

In der Praxis hat es sich als besonders vorteilhaft erwiesen, wenn jeder Stützkörper 10 mittels des Transportförderers beim Fördern von Fisch durch das Schneidaggregat 4 derart geführt wird, dass das Kreismesserpaar 6 in die Nut 18 des zugehörigen Tragstegs 14 einfasst. Wie in Fig. 3 dargestellt, fasst dabei die äußere (also die von der Rotationsachse A abgewandte) Schneide 24 des jeweiligen Kreismessers 6a, 6b des Kreismesserpaars 6 in die Nut 18 des Tragstegs 14 ein. Der Abstand zwischen der Transportebene E beziehungsweise der Mittelgräte und der Schneide 24 kann somit auf ein Minimum reduziert werden. Das Einfassen als solches kann am Horn 22 des Tragstegs 14 beim Fördern von Fisch beginnen. Während des Förderns des Fisches mittels des Stützkörpers 10 durch das Schneidaggregat 4 kann das Einfassen anhalten und mit dem Erreichen des dem Horn 22 gegenüber liegenden Endes der Nut 18 enden. Mit anderen Worten fasst das Kreismesserpaar 6 während des Förderns des Fisches mittels des jeweiligen Stützkörpers 10 in die jeweilige Nut 18 des zugehörigen Tragstegs 14 ein. Damit lässt sich ein besonders präziser und wiederholbarer Schnitt erreichen.

Des Weiteren ist es bevorzugt vorgesehen, dass der oder jeder Tragsteg 14 über den zugehörigen Grundkörper 12 des Stützkörpers 10 quer zu einer Förderrichtung T des Transportförderers und/oder quer zu einer Längserstreckung der Nut 18 hinaus ragt. Mit einer derartigen Ausgestaltung können auch besonders kleine Fische, insbesondere mit einer geköpften Länge zwischen 18 und 38 cm verarbeitet beziehungsweise deren jeweilige Mittelgräte frei geschnitten werden. Gegenüber sogenannten Mittelsattelstützkörpern, die mittig zwischen Kreismessern 6a, 6b eines Kreismesserpaars 6 beim Fördern von Fisch hindurchgeführt werden, kann der Abstand der Kreismesser 6a, 6b bei einer der zuvor erläuterten, erfindungsgemäßen Ausgestaltung ohne Rücksicht auf die Dicke/Stärke des Grundkörperes 12 eines Stützkörpers 10 verringert werden. Anders ausgedrückt kann bei der Verwendung eines Mittelsattelstützkörpers der Messerabstand nur auf die Dicke/Stärke des Stützkörpers 10 verringert werden, da dieser anderenfalls eine Störkontur für das Kreismesserpaar 6 bilden würde. Diese Nachteile werden jedoch durch die zuvor genannte, erfindungsgemäße Ausgestaltung überwunden.

Eine vorteilhafte Ausgestaltung der Erfindung zeichnet sich dadurch aus, dass sich die Nut 18 des oder jedes Tragstegs 14 über dessen gesamte Länge erstreckt. Die Länge ist hierbei in Förderrichtung T gesehen. Mit anderen Worten ist die Nut 18 bevorzugt durchgängig ausgestaltet. Somit ist es möglich, dass das Kreismesserpaar 6 am Horn 22 in die Nut 18 einfasst und/oder dass der Stützkörper 10 beziehungsweise der Tragsteg 14 das Kreismesserpaar 6 in diesem eingefassten Zustand passiert. Somit bedarf es keiner zusätzlichen und/oder erneuten vertikalen Ausrichtung des Kreismesserpaares 6. Das Freischneiden der Mittelgräte kann somit besonders einfach gewährleistet werden.

Des Weiteren hat es sich als vorteilhaft erwiesen, wenn die Nut 18 des oder jedes Tragstegs 14 in einer Förderrichtung T des Transportförderers und/oder in einer Rotationsebene des Kreismesserpaares 6 ausgerichtet ist. Damit kann gewährleistet werden, dass der Stützkörper 10 in einer translatorischen Bewegung an dem Kreismesserpaar 6 vorbeigeführt werden kann. Der Transportförderer kann dazu eine entsprechende Linearführung zum translatorischen Führen der Stützkörper 10 aufweisen.

Für eine vorteilhafte Ausbildung der Erfindung ist es vorgesehen, dass die Nut 18 des oder jedes Tragstegs 14 durch zwei seitliche Nutwände 26a, 26b und einem Nutboden 28 begrenzt ist. Außerdem kann es vorgesehen sein, dass der Abstand der zwei Nutwände 26a, 26b der oder jeder Nut 18 zu einem Abstand der Kreismesser 6a, 6b des Kreismesserpaars 6 korrespondiert. Bevorzugt sind die Kreismesser 6a, 6b parallel und/oder koaxial zueinander angeordnet. Sie können dazu eine gemeinsame Rotationsachse A aufweisen. Der Abstand zwischen den Kreismessern 6a, 6b wird deshalb bevorzugt in Richtung der Rotationsachse A gesehen. Durch die Anpassung des Abstandes der Nutwände 26a, 26b an den Abstand der Kreismesser 6a, 6b oder umgekehrt kann ein besonders sauberer und/oder präziser Schnitt erreicht werden. Denn wegen dieser Ausgestaltung bilden die Nutwände 26a, 26b eine Gegenlage beziehungsweise eine Schneidgegenlage für die Kreismesser 6a, 6b des Kreismesserpaars 6. Bevorzugt ist die äußere Schneide 24 des jeweilige Kreismesser 6a, 6b des Kreismesserpaars 6 spitzwinklig ausgestaltet, so dass deren Stärke keinen und/oder nur einen geringen Einfluss auf die Anpassung des Abstands der Nutwände 26a, 26b hat. Gegebenenfalls kann die Dicke der äußeren Schneide 24 bei der Anpassung des Abstandes der Nutwände 26a, 26b Berücksichtigung finden. Die Nutwände 26a, 26b können auch als Führungselemente für die Kreismesser 6a, 6b während des Förderns von Fisch durch das Schneidaggregat 4 dienen. Ferner kann es vorgesehen sein, dass der Abstand zwischen den Nutwänden 26a, 26b der jeweiligen Nut 18 um eine Toleranzgröße, beispielsweise 10%, gegenüber dem Abstand der Kreismesser 6a, 6b vergrößert ist, um den mechanischen Verschleiß möglichst gering zu halten.

Eine weitere vorteilhafte Ausgestaltung der Erfindung zeichnet sich dadurch aus, dass das Kreismesserpaar 6 beim Eingriff in die Nut 18 des Tragstegs 14 von dem zugehörigen Nutboden 28 beabstandet ist. Somit wird ein mechanischer Kontakt zwischen dem Nutboden 28 und dem Kreismesserpaar 6 beziehungsweise deren Kreismessern 6a, 6b verhindert. Dies gewährleistet besonders einfach und sicher, dass das Kreismesserpaar 6 beziehungsweise die Kreismesser 6a, 6b nicht stumpf werden. Dabei kann der Abstand zwischen dem Nutboden 28 und dem Kreismesserpaar 6 derart gewählt werden, dass ein mechanischer Kontakt selbst nach einer längeren Betriebszeit und/oder einem damit verbundenen Verschleiß, insbesondere eines Führungselements des Transportförderers, nicht auftritt. Auf diese Weise können die Wartungskosten verringert werden.

Eine weitere vorteilhafte Ausgestaltung der Erfindung zeichnet sich dadurch aus, dass die Nutwände 26a, 26b des oder jedes Tragstegs 14 im Bereich eines Einführungsabschnitts 30 konisch und/oder spitzwinklig zueinander angeordnet sind. Der Einführungsabschnitt 30 der Nutwände 26a, 26b ist in Förderrichtung T gesehen vorne angeordnet. Mit anderen Worten ist der Einführungsabschnitt 30 im Bereich des Horns 22 angeordnet. Diese konisch und/oder spritzwinklig angeordneten Seitenwände 26a, 26b im Bereich des Einführungsabschnitts 30 eignen sich zum "einfädeln" oder einführen des Kreismesserpaars 6 in die Nut 18. Somit wird effektiv verhindert, dass das Kreismesserpaar 6 beim Fördern von Fisch mittels des Stützkörpers 10 durch das Schneidaggregat 4 zerstört wird. Mit anderen Worten wird also verhindert, dass das Kreismesserpaar 6 in der Weise auf den Stützkörper 10 oder Tragsteg 14 trifft, dass das Kreismesserpaar 6 und/oder der Tragsteg 14 zerstört wird und/oder der Stützkörper 10 aus einer Führung des Transportförderers springt. Folglich werden die Ausfallzeiten der Vorrichtung 2 zum Verarbeiten von Fisch minimiert.

Für eine vorteilhafte Ausgestaltung der Erfindung ist es des Weiteren vorgesehen, dass die Unterseite 32 des Tragstegs 14 konkav ausgestaltet ist. Sollte also das Kreismesserpaar 6 doch einmal aus der Nut 18 herausspringen, so wird es durch die konkave Ausgestaltung der Unterseite 32 des Tragstegs 14 wieder in die Nut 18 geführt.

Die konkave Unterseite 32 dient somit zur Eigenstabilisierung des Freischneidens der Mittelgräte.

Eine weitere vorteilhafte Ausgestaltung der Erfindung zeichnet sich dadurch aus, dass die Nutwände 26a, 26b des oder jedes Tragstegs 14, vorzugsweise bis auf den Einfiihrungsbereich 30, parallel zueinander ausgerichtet sind. Damit ist es möglich, Fisch in einer linearen beziehungsweise in einer rein translatorischen Bewegung durch das Schneidaggregat 4 zu führen. Durch diese Ausgestaltung kann die Vorrichtung 2 besonders kostengünstig, beispielsweise mittels einer Linearführung des Transportförderers, ausgestaltet sein.

Eine weitere vorteilhafte Ausgestaltung der Erfindung zeichnet sich dadurch aus, dass das Kreismesserpaar 6 mittels eines Stellelements des Schneidaggregats 4 aus einer Warteposition in eine Arbeitsposition und/oder umgekehrt bringbar ist. In einer Warteposition kann das Kreismesserpaar 6 in der Weise angeordnet sein, dass es mit ansonsten störenden Elementen des umlaufenden Transportförderers nicht kollidiert. Somit kann das Kreismesserpaar 6 in einer Warteposition vor einer Zerstörung bewahrt werden. In einer Arbeitsposition kann das Kreismesserpaar zum Einfassen in die Nut 18 eines Tragstegs 14 angeordnet sein. Wie zuvor erläutert, ist dies ebenfalls ohne eine Zerstörung des Kreismesserpaars 6 möglich.

## Patentansprüche

1. Ein **L-förmiger Stützkörper** (10), ausgebildet und eingerichtet zum Aufnehmen von Fisch und zum Fördern desselben mit dem Fischschwanz voraus durch ein Schneidaggregat (4) mit einem Kreismesserpaar (6) einer Fischverarbeitungsvorrichtung, die einen endlos umlaufenden Transportförderer aufweist, wobei der Stützkörper (10) einen Grundkörper (12) zum Befestigen desselben an dem Transportförderer und einen über eine Seitenwand (11) des Grundkörpers (12) hinausragenden Tragsteg (14) mit einer oberseitig angeordneten Stützkante (16) zum Aufnehmen der Mittelgräte des aufzunehmenden Fisches aufweist, **dadurch gekennzeichnet, dass** der Tragsteg (14) eine unterseitig angeordnete Nut (18) aufweist, die als Gegenlage für das Kreismesserpaar (6) ausgebildet ist.

2. L-förmiger Stützkörper nach dem vorangehenden Anspruch, **dadurch gekennzeichnet, dass** sich die Nut (18) jedes Tragstegs (14) über dessen gesamte Länge erstreckt.

3. L-förmiger Stützkörper nach einem der vorhergehenden Ansprüche, **dadurch gekennzeichnet, dass** die Nut (18) des Tragsteges (14) durch zwei seitliche Nutwände (26a, 26b) und einen Nutboden (28) begrenzt ist, wobei die Nutwände (26a, 26b) jedes Tragstegs (14) im Bereich eines Einführungsabschnitts (30) konisch zueinander angeordnet sind.

4. L-förmiger Stützkörper nach dem vorangehenden Anspruch, **dadurch gekennzeichnet, dass** die Nutwände (26a, 26b) des Tragstegs (14), vorzugsweise bis auf den Einführungsabschnitt (30), parallel zueinander ausgerichtet sind.

5. Eine **Vorrichtung** zum Verarbeiten von Fischen, umfassend ein Schneidaggregat (4), wobei das Schneidaggregat (4) ein Kreismesserpaar (6) zum Freischneiden der Mittelgräte aufweist, und eine Transportfördereinheit (8) mit einem endlos umlaufenden Transportförderer und mindestens einem daran befestigten L-förmigen Stützkörper (10) zum Aufnehmen der Fische und zum Fördern derselben durch das Schneidaggregat (4) mit dem Fischschwanz voraus, wobei jeder Stützkörper (10) einen an dem Transportförderer befestigten Grundkörper (12) und einen über eine Seitenwand des Grundkörpers (12) hinausragenden Tragsteg (14) mit einer oberseitig angeordneten Stützkante (16) zum Aufnehmen der Mittelgräte des jeweils zu verarbeitenden Fisches aufweist, **dadurch gekennzeichnet, dass** jeder L-förmige Stützkörper nach einem der Ansprüche 1 bis 4 ausgebildet ist.

6. Vorrichtung nach dem vorangehenden Anspruch, **dadurch gekennzeichnet, dass** jeder Tragsteg (14) über den zugehörigen Grundkörper (12) des Stützkörpers (10) quer zu einer Förderrichtung (T) des Transportförderers hinausragt.

7. Vorrichtung nach einem der vorhergehenden Ansprüche 5-6, **dadurch gekennzeichnet, dass** die Nut (18) jedes Tragsteges (14) in einer Förderrichtung (T) des Transportförderers und/oder in einer Rotationsebene des Kreismesserpaars (6) ausgerichtet ist.

8. Vorrichtung nach einem der vorhergehenden Ansprüche 5-7, **dadurch gekennzeichnet, dass** jeder Stützkörper (10) mittels des Transportförderers beim Fördern von Fisch durch das Schneidaggregat (4) derart geführt ist, dass das Kreismesserpaar (6) in die Nut (18) des zugehörigen Tragstegs (14) einfasst.

9. Vorrichtung nach einem der vorhergehenden Ansprüche 5-8, **dadurch gekennzeichnet, dass** ein Abstand der zwei Nutenwände (26a, 26b) jedes Tragsteges (14) zu einem Abstand der Kreismesser (6a, 6b) des Kreismesserpaars (6) korrespondiert.

10. Vorrichtung nach einem der vorangehenden Ansprüche 5-9, **dadurch gekennzeichnet, dass** das Kreismesserpaar (6) beim Eingriff in die Nut (18) des Tragsteges (14) von dem zugehörigen Nutboden (28) beabstandet ist.

11. Vorrichtung nach einem der vorhergehenden Ansprüche 5-10, **dadurch gekennzeichnet, dass** das Kreismesserpaar (6) mittels eines Stellelements des Schneidaggregats (4) aus einer Warteposition in eine Arbeitsposition und umgekehrt bringbar ist.

## Claims

1. An **L-shaped supporting body** (10) configured and adapted for accommodating a fish and for conveying said fish tail first, through a cutting unit (4) having a circular blade pair (6) of a fish processing apparatus, which has a continuously revolving conveyor, wherein the supporting body (10) has a main body (12) for fastening said supporting body to the conveyor and a bearing web (14), which protrudes beyond a side wall (11) of the main body (12) and which has a supporting edge (16) arranged at the top for accommodating the backbone of the fish to be accommodated, **characterised in that** the bearing web (14) has a groove (18) arranged on the underside, which groove is designed as a countersupport for the circular blade pair (6).

2. L-shaped supporting body according to the preceding claim, **characterised in that** the groove (18) of each bearing web (14) extends over the entire length of said bearing web.

3. L-shaped supporting body according to anyx one of the preceding claims, **characterised in that** the groove (18) of the bearing web (14) is limited by two lateral groove walls (26a, 26b) and a groove base (28), wherein the groove walls (26a, 26b) of each bearing web (14) are arranged conically to each other in the region of an entry section (30).

4. L-shaped supporting body according to the preceding claim, **characterised in that** the groove walls (26a, 26b) of the bearing web (14) are aligned parallel to each other, preferably up to the entry section (30).

5. An **apparatus** for processing fish, comprising a cutting unit (4), wherein the cutting unit (4) has a circular blade pair (6) for cutting free the backbone and a conveyor unit (8) with a continuously revolving conveyor and at least one L-shaped supporting body (10) for accommodating the fish and for conveying said fish tail first through the cutting unit (4), wherein each supporting body (10) has a main body (12) attached to the conveyor and a bearing web (14) protruding beyond a side wall of the main body (12) and which has a supporting edge (16) arranged at the top for accommodating the backbone of each fish to be processed, **characterised in that** each L-shaped supporting body is designed according to any one of claims 1 to 4.

6. Apparatus according to the preceding claim, **characterised in that** each bearing web (14) protrudes beyond the associated main body (12) of the supporting body (10) transverse to a conveying direction (T) of the conveyor.

7. Apparatus according to any one of the preceding claims 5-6, **characterised in that** the groove (18) of each bearing web (14) is aligned in a conveying direction (T) of the conveyor and/or in a rotational plane of the circular blade pair (6).

8. Apparatus according to any one of the preceding claims 5-7, **characterised in that** each supporting body (10) is guided by means of the conveyor when conveying fish through the cutting unit (4) in such a way that the circular blade pair (6) engages in the groove (18) of the associated bearing web (14).

9. Apparatus according to any one of the preceding claims 5-8, **characterised in that** a gap between the two groove walls (26a, 26b) of each bearing web (14) corresponds to a gap between the circular blades (6a, 6b) of the circular blade pair (6).

10. Apparatus according to any one of the preceding claims 5-9, **characterised in that** the circular blade pair (6) is at a distance from the associated groove base (28) on engaging in the groove (18) of the bearing web (14).

11. Apparatus according to any one of the preceding claims 5-10, **characterised in that** the circular blade pair (6) can be brought out of a waiting position into a working position and vice versa using a positioning element of the cutting unit (4).

## Revendications

1. **Corps de support en forme de** L (10), configuré et adapté pour la réception de poisson et pour le convoyage de celui-ci avec la queue du poisson en avant à travers un groupe de coupe (4) avec une paire de lames circulaires (6) d'un dispositif de traitement de poisson, qui présente un convoyeur de transport à circulation sans fin, le corps de support (10) présentant un corps de base (12) pour la fixation de celui-ci sur le convoyeur de transport et une entretoise porteuse (14) dépassant d'une paroi latérale (11) du corps de base (12) avec une arête de support (16) agencée sur le côté supérieur pour la réception de l'arête centrale du poisson à recevoir, **caractérisé en ce que** l'entretoise porteuse (14) présente une rainure (18) agencée sur le côté inférieur, qui est configurée en tant que contre-appui pour la paire de lames circulaires (6).

2. Corps de support en forme de L selon la revendication précédente, **caractérisé en ce que** la rainure (18) de chaque entretoise porteuse (14) s'étend sur toute sa longueur.

3. Corps de support en forme de L selon l'une quelconque des revendications précédentes, **caractérisé en ce que** la rainure (18) de l'entretoise porteuse (14) est délimitée par deux parois de rainure latérales (26a, 26b) et un fond de rainure (28), les parois de rainure (26a, 26b) de chaque entretoise porteuse (14) étant agencées de manière conique l'une par rapport à l'autre dans la zone d'une section d'insertion (30).

4. Corps de support en forme de L selon la revendication précédente, **caractérisé en ce que** les parois de rainure (26a, 26b) de l'entretoise porteuse (14) sont orientées parallèlement l'une à l'autre, de préférence à l'exception de la section d'insertion (30).

5. **Dispositif** de traitement de poissons, comprenant un groupe de coupe (4), le groupe de coupe (4) présentant une paire de lames circulaires (6) pour découper l'arête centrale, et une unité de convoyeur de transport (8) avec un convoyeur de transport à circulation sans fin et au moins un corps de support en forme de L (10) fixé sur celui-ci pour la réception des poissons et pour le convoyage de ceux-ci à travers le groupe de coupe (4) avec la queue du poisson en avant, chaque corps de support (10) présentant un corps de base (12) fixé au convoyeur de transport et une entretoise porteuse (14) dépassant d'une paroi latérale du corps de base (12) avec une arête de support (16) agencée sur le côté supérieur pour la réception de l'arête centrale du poisson respectif à traiter, **caractérisé en ce que** chaque corps de support en forme de L est configuré selon l'une quelconque des revendications 1 à 4.

6. Dispositif selon la revendication précédente, **caractérisé en ce que** chaque entretoise porteuse (14) dépasse du corps de base (12) correspondant du corps de support (10) transversalement à une direction de convoyage (T) du convoyeur de transport.

7. Dispositif selon l'une quelconque des revendications 5 à 6 précédentes, **caractérisé en ce que** la rainure (18) de chaque entretoise porteuse (14) est orientée dans une direction de convoyage (T) du convoyeur de transport et/ou dans un plan de rotation de la paire de lames circulaires (6).

8. Dispositif selon l'une quelconque des revendications 5 à 7 précédentes, **caractérisé en ce que** chaque corps de support (10) est guidé au moyen du convoyeur de transport lors du convoyage du poisson par le groupe de coupe (4) de telle sorte que la paire de lames circulaires (6) s'engage dans la rainure (18) de l'entretoise porteuse (14) correspondante.

9. Dispositif selon l'une quelconque des revendications 5 à 8 précédentes, **caractérisé en ce qu'**une distance des deux parois de rainure (26a, 26b) de chaque entretoise porteuse (14) correspond à une distance des lames circulaires (6a, 6b) de la paire de lames circulaires (6).

10. Dispositif selon l'une quelconque des revendications 5 à 9 précédentes, **caractérisé en ce que** la paire de lames circulaires (6) est espacée du fond de rainure (28) correspondant lors de l'engagement dans la rainure (18) de l'entretoise porteuse (14).

11. Dispositif selon l'une quelconque des revendications 5 à 10 précédentes, **caractérisé en ce que** la paire de lames circulaires (6) peut être amenée d'une position d'attente à une position de travail et inversement au moyen d'un élément de réglage du groupe de coupe (4).
